# EUROPÄISCHE PATENTANMELDUNG

(11) **EP 1 845 271 A2**
(43) Veröffentlichungstag der Anmeldung: **17.10.2007**
(21) Anmeldenummer: 07007275.6
(22) Anmeldetag: 07.04.2007
(51) Int. Cl.: F16C 19/54, F16C 23/06, F16C 25/08

(54) **Wälzlageranordnung**

(30) Priorität: 13.04.2006 DE 102006017443
(71) Anmelder: AB SKF, S-415 50 Göteborg (SE)
(72) Erfinder: Meyer, Wilhelm, 97453 Schonungen-Reichmannshausen (DE)
(74) Vertreter: Kohl, Thomas

(57) **Zusammenfassung**

Eine Wälzlageranordnung umfasst folgende Merkmale:
- Wenigstens eine erste und eine zweite nebeneinander angeordnete Wälzkörperreihe (14,14'),
- ein erstes und ein zweites Außenteil (12,12'), bildend die äußeren Abrollbahnen für die erste und die zweite Wälzkörperreihe, und
- ein zwischen den beiden Außenteilen und den beiden Wälzkörperreihen angeordnetes Zwischenteil (20,30'), das zu den beiden Wälzkörperreihen einen Spalt ausbildend beabstandet, im wesentlichen den Zwischenraum zwischen den beiden Wälzkörperreihen ausfüllend ausgebildet ist.

## Beschreibung

Die Erfindung betrifft eine Wälzlageranordnung.

Beispielsweise aus der DE 4138 589 A1 sind bei einer Winkelmessvorrichtung für ein Verbinden eines zum Drehen vorgesehenen Teils mit einem nicht zum Drehen vorgesehenen Teil zwei zueinander verspannte Kugellager vorgesehen, wobei durch das Verspannen die beiden Teile zueinander spielfrei werden.

Eine Aufgabe der Erfindung ist es, eine Wälzlageranordnung mit zwei nebeneinander angeordneten Wälzkörperreihen derart zu gestalten, dass bei gleichzeitig einfacher und damit kostengünstiger Ausbildung der Wälzlageranordnung und insbesondere geringen Schmierstoffmengen eine gesicherte Schmierstoffversorgung der einzelnen Wälzkörperreihen erzielt wird.

Die Aufgabe wird durch den Gegenstand des Anspruchs 1 gelöst. Vorteilhafte Ausgestaltungen sind in den Unteransprüchen beschrieben.

Gemäß Anspruch 1 umfasst eine Wälzlageranordnung folgende Merkmale:
- Wenigstens eine erste und eine zweite nebeneinander angeordnete Wälzkörperreihe,
- ein erstes und ein zweites Außenteil, bildend die äußeren Abrollbahnen für die erste und die zweite Wälzkörperreihe, und
- ein zwischen den beiden Außenteilen und den beiden Wälzkörperreihen angeordnetes Zwischenteil, das zu den beiden Wälzkörperreihen einen Spalt ausbildend beabstandet, im wesentlichen den Zwischenraum zwischen den beiden Wälzkörperreihen ausfüllend ausgebildet ist.

Dadurch, dass das Zwischenteil zu den beiden Wälzkörperreihen einen Spalt ausbildend beabstandet, im wesentlichen den Zwischenraum zwischen den beiden Wälzkörperreihen ausfüllend ausgebildet ist, ist auch bei geringen Schmierstoffmengen eine gute und gesicherte Schmierstoffversorgung der einzelnen Wälzkörperreihen sichergestellt, wobei die besagte Ausbildung mit besonderem Vorteil auch dann die genannten Vorteile bewirkt, wenn insbesondere bei vertikaler Verbauung der Wälzlageranordnung nicht vorher bestimmbar ist, welche der Wälzkörperreihen sozusagen die obere oder die untere ist. Eine derartige wechselnde vertikale Anordnung ist beispielsweise typisch bei Einsatz besagter Wälzlageranordnung in Drehgebern. Gleichzeitig wird durch die zwei Außenteile, insbesondere gegenüber einer Ausführung mit einem einstückigen Außenring für beide Wälzkörperreihen, eine einfache und damit kostengünstige Ausgestaltung der Wälzlageranordnung erzielt.

Wie bereits oben ausgeführt, ist die Lösung für vertikale Anordnungen, also vertikale Ausrichtungen der Wälzlagerhauptachsen besonders vorteilhaft, wobei auch eine horizontale Anordnung die Wirksamkeit der Lösung nicht ausschließt. Die Lösung ist damit besonders vorteilhaft bei vertikaler Welle und Minimalschmierung. Besondere Vorteile der Lösung sind dabei, dass eine Schmierstoffbeaufschlagung der Umgebung sicher verhindert wird und dass die geringe Schmierstoffmenge wirksam an den Wälzkörpern und/oder den Funktionsteilen gehalten wird. Dabei reduziert besagtes Zwischenteil den nicht zum Umwälzen vorgesehenen Wälzlagerinnenraum, also den Wälzlagerfreiraum neben dem umlaufenden Wälzkörpersatz, wobei in anderen Ausführungen und/oder am anderen axialen Ende des Wälzlagers diese Funktion auch durch eine entsprechend ausgebildete Dichtung übernommen werden kann. Dies beschränkt sich dabei nicht auf paarweise angeordnete Wälzlager, sondern kann auch bei einem einzelnen Wälzlager vorgesehen werden.

In einer vorteilhaften Ausgestaltung ist die Wälzlageranordnung derart ausgebildet, dass das Zwischenteil am Innenmantel der Außenteile und/oder an den einander zugewandten Stirnseiten der Außenteile zum abdichtenden Anliegen für ein abgedichtetes Wälzlageranordnungsinneres vorgesehen ist. Dadurch wird mit Vorteil ein Austreten von Schmiermittel, insbesondere eines Schmierfettes, aus dem Lagerinneren nach außen hin verhindert, was insbesondere dann von besonderem Vorteil ist, wenn um die Wälzlageranordnung herum ein auf optischer Erfassung basierendes Meßsystem angeordnet ist. Diese Abdichtfunktion wird insbesondere dadurch unterstützt, dass an den, dem Zwischenteil gegenüberliegenden Seiten der beiden Wälzkörperreihen insbesondere reibungsarme Dichtscheiben angeordnet sind.

In einer vorteilhaften Ausgestaltung gehören die Außenteile sowie die dazugehörigen Wälzkörperreihen zu zwei Standardrillenkugellagern. Durch besagte Verwendungsmöglichkeit zweier Standardrillenkugellager ist damit eine einfache und damit auch kostengünstige Ausbildung der Wälzlageranordnung möglich. Mit besonderem Vorteil sind die beiden Wälzlager identisch ausgebildet, womit sie wechselseitig einbaubar sind und sich kein Problem einer Verwechslungsgefahr ergibt.

Weitere Vorteile, Merkmale und Einzelheiten der Erfindung ergeben sich aus den im folgenden beschriebenen Ausführungsbeispielen der Erfindung anhand der Figuren. Dabei zeigen:
- Figur 1: einen Längsschnitt durch eine Wälzlageranordnung mit einem Zwischenteil in einer ersten Ausführungsform,
- Figur 2: einen Längsschnitt durch eine Wälzlageranordnung mit einem Zwischenteil in einer zweiten Ausführungsform und
- Figur 3: eine Außenansicht der Wälzlageranordnung der Figur 2.

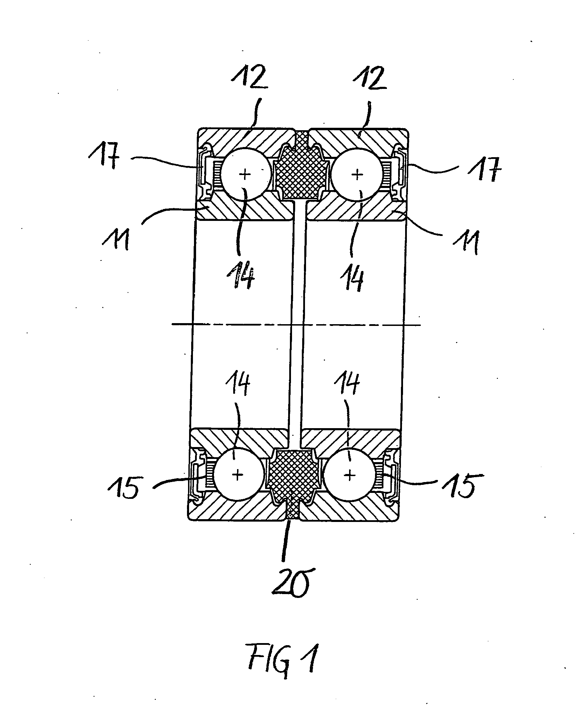

Die Figur 1 zeigt als ein Ausführungsbeispiel der Erfindung einen Längsschnitt durch eine Wälzlageranordnung mit einem Zwischenteil 20 in einer ersten Ausführungsform. Dabei umfasst die Wälzlageranordnung zwei nebeneinander angeordnete Standardrillenkugellager, wobei jedes der Kugellager einen Innenring 11, einen Außenring 12 und dazwischen angeordnete, als Kugeln 14 ausgebildete Wälzkörper umfasst. Dabei sind die Kugeln 14 bei jedem der beiden Kugellager in einen kammartigen Käfig 15 eingeschnappt, dessen ringartiger Bereich jeweils auf der, dem Zwischenteil 20 gegenüberliegenden Seite der Kugelreihen angeordnet ist. Weiterhin ist jedes der beiden Kugellager wiederum auf der, dem Zwischenteil 20 gegenüberliegenden Seite der Kugelreihe mit einer reibungsarmen Dichtscheibe 17 nach außen hin abgedichtet. In anderen Ausführungsformen können natürlich auch anders ausgebildete, insbesondere schleifende Dichtungen eingesetzt werden.

Das Zwischenteil 20 ist zwischen den beiden Außenringen 12 und den beiden Kugelreihen angeordnet und derart ausgebildet, dass es zu den beiden Kugelreihen einen Spalt ausbildend beabstandet ist und im wesentlichen den Zwischenraum zwischen den beiden Wälzkörperreihen ausfüllt. Derjenige Bereich des Zwischenteils 20, der zwischen den beiden einander zugewandten Stirnseiten der Außenringe 12 angeordnet ist, ist zwischen den beiden Außenringen 12 so verklemmbar, dass das Innere der Wälzlageranordnung bezüglich einem Schmiermittelaustritt nach außen abgedichtet ist.

Da, wie bereits vorausgehend erwähnt, Standardrillenkugellager Anwendung finden, sind die beiden Außenringe 12 in einem Übergangsbereich von ihren Stirnseiten hin zu ihren Innenmänteln mit in axialer Richtung einen Hinterschnitt ausbildenden Absätzen gestaltet. In diesem Bereich ist dabei das Zwischenteil 20 entsprechend geformt. Durch das Anliegen des Zwischenteils 20 im besagten Bereich kann eine weitere Dichtfunktionalität erzeugt werden. Weiterhin sind damit die beiden Kugellager, zusammengehalten durch das Zwischenteil 20, zusammen mit dem Zwischenteil 20 mit Vorteil als eine in sich verliersicher zusammengehaltene Einheit lieferbar und einbaubar.

Das Zwischenteil ist einstückig aus einem Kunststoff ausgebildet. Insbesondere die Ausbildung aus Kunststoff begünstigt dabei die vorausgehend beschriebenen Dichtwirkungen. In das Innere der Wälzlageranordnung zwischen den Dichtscheiben 17, das neben den beiden Kugelreihen, deren Käfige 15 und dem Zwischenteil 20 übrig bleibt, ist ein Schmiermittel, insbesondere ein Schmierfett eingebracht.

Die vorausgehend beschriebene Wälzlageranordnung ist dabei zum Aufbringen auf eine entsprechende Welle vorgesehen, wobei die Wälzlageranordnung derart auf der Welle montiert wird, dass auch zwischen den beiden Innenringen 11 ein Austreten von Schmiermittel nicht möglich ist. Die Welle kann dabei beispielsweise derart ausgebildet sein, dass einer der Innenringe 11 stirnseitig an einem von der Welle ausgebildeten axialen Anschlag zur Anlage kommt und der andere der Innenringe 11 über entsprechende Mittel, beispielsweise eine Wellenmutter, in Richtung des Anschlags drückbar ist, wobei damit die Wälzlageranordnung gezielt angestellt werden kann. Die Außenringe 12 können weiterhin in einem entsprechenden Gehäuse durch Einkleben befestigt werden.

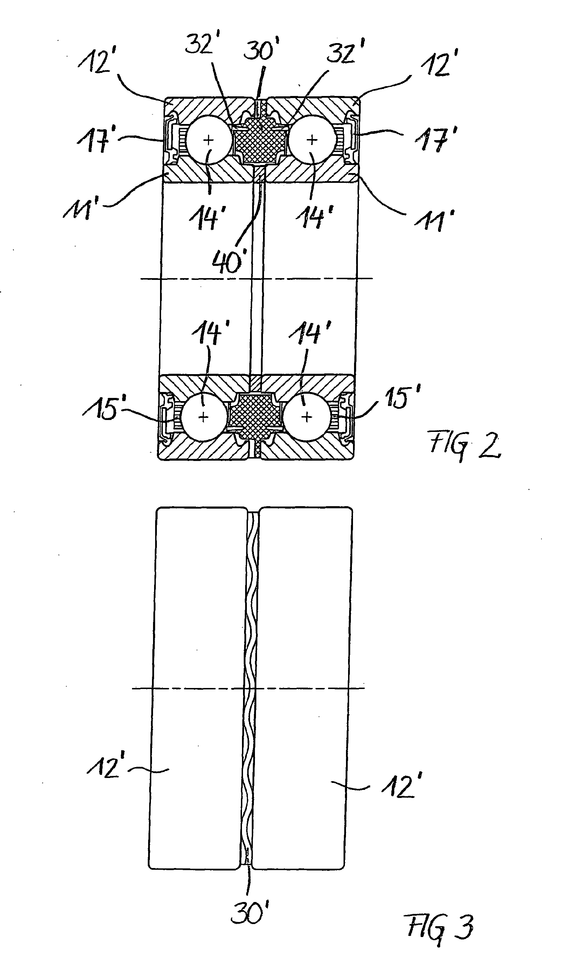

Die Figur 2 zeigt als ein weiteres Ausführungsbeispiel der Erfindung einen Längsschnitt durch eine Wälzlageranordnung mit einem Zwischenteil 30' in einer zweiten Ausführungsform. Dazu zugehörig zeigt die Figur 3 eine Außenansicht der Wälzlageranordnung der Figur 2. Bei der Wälzlageranordnung der Figuren 2 und 3 ist das Zwischenteil 30' zwischen den beiden einander zugewandten Stirnseiten der Außenringe 12' der beiden Standardrillenkugellager in Umfangsrichtung gewellt ausgebildet, so dass dadurch das Zwischenteil 30' zwischen den beiden einander zugewandten Stirnseiten der beiden Außenringe 12' die Funktion einer Axialfeder bzw. einer Ringfeder wahrnimmt. Da damit keine Abdichtung zwischen den beiden einander zugewandten Stirnseiten der Außenringe 12' erzielt ist, ist das Zwischenteil 30' weiterhin in einem Bereich hin zu den Innenmänteln der beiden Außenringe 12' von der Seite der Kugelreihen aus mit radial umlaufenden, sich im wesentlichen axial erstreckenden Schlitzen 32' ausgebildet, so dass die bezüglich der Schlitze 32' radial weiter außen liegenden Bereiche des Zwischenteils 30' abdichtend an den Innenmänteln der Außenringe 12' zur Anlage kommen. Weiterhin ist zwischen den beiden Innenringen 11' eine Scheibe 40' angeordnet, über die eine gezielte axiale Verspannung beim Montieren der Wälzlageranordnung auf einer Welle eingebracht werden kann. Ansonsten gilt das vorausgehend zu der Figur 1 Beschriebene bei der Wälzlageranordnung der Figuren 2 und 3 entsprechend. Dabei sind Bauelemente der Figuren 2 und 3, die mit denen der Figur 1 übereinstimmen, mit gleichen Bezugszeichennummern, ergänzt um einen Hochstrich bezeichnet.

### Bezugszeichenliste

- 11,11': Innenring
- 12, 12': Außenring
- 14, 14': Kugel
- 15, 15': Käfig
- 17, 17': Dichtscheibe

- 20: Zwischenteil

- 30': Zwischenteil
- 32': Schlitz
- 40': Scheibe

## Patentansprüche

1. Wälzlageranordnung, umfassend folgende Merkmale:
- Wenigstens eine erste und eine zweite nebeneinander angeordnete Wälzkörperreihe,
- ein erstes und ein zweites Außenteil, bildend die äußeren Abrollbahnen für die erste und die zweite Wälzkörperreihe, und
- ein zwischen den beiden Außenteilen und den beiden Wälzkörperreihen angeordnetes Zwischenteil, das zu den beiden Wälzkörperreihen einen Spalt ausbildend beabstandet, im wesentlichen den Zwischenraum zwischen den beiden Wälzkörperreihen ausfüllend ausgebildet ist.

2. Wälzlageranordnung nach Anspruch 1, wobei die Wälzlageranordnung derart ausgebildet ist, dass das Zwischenteil am Innenmantel der Außenteile und/oder an den einander zugewandten Stirnseiten der Außenteile zum abdichtenden Anliegen vorgesehen ist.

3. Wälzlageranordnung nach einem der Ansprüche 1 oder 2, wobei die Wälzlageranordnung derart ausgebildet ist, dass das Zwischenteil zwischen den beiden einander zugewandten Stirnseiten der Außenteile festklemmbar ist.

4. Wälzlageranordnung nach einem der Ansprüche 1 bis 3, wobei die Wälzlageranordnung derart gestaltet ist, dass das Zwischenteil zwischen den beiden einander zugewandten Stirnseiten der Außenteile in Umfangsrichtung mit einer Wellung ausgebildet ist.

5. Wälzlageranordnung nach einem der Ansprüche 1 bis 4, wobei das Zwischenteil wenigstens in einem Bereich hin zum Innenmantel eines der Außenteile von der Seite einer der Wälzkörperreihen aus mit einem radial umlaufenden, sich im wesentlichen axial erstreckenden Schlitz ausgebildet ist.

6. Wälzlageranordnung nach einem der Ansprüche 1 bis 5, wobei wenigstens eines der Außenteile in einem Übergangsbereich von seiner Stirnseite hin zu seinem Innenmantel mit einem, in axialer Richtung einen Hinterschnitt ausbildenden Absatz gestaltet ist.

7. Wälzlageranordnung nach Anspruch 6, wobei das Zwischenteil im Bereich des Absatzes entsprechend dem Absatz geformt ist.

8. Wälzlageranordnung nach einem der Ansprüche 1 bis 7, wobei das Zwischenteil einstückig ausgebildet ist.

9. Wälzlageranordnung nach einem der Ansprüche 1 bis 8, wobei das Zwischenteil aus einem Kunststoff ausgebildet ist.

10. Wälzlageranordnung nach einem der Ansprüche 1 bis 9, wobei die Wälzlageranordnung ein erstes und ein zweites Innenteil, bildend die inneren Abrollbahnen der ersten und der zweiten Wälzkörperreihe umfasst.

11. Wälzlageranordnung nach Anspruch 10, wobei wenigstens eine der Einheiten, umfassend ein Außen- und ein Innenteil mit dazwischen angeordneter Wälzkörperreihe ein Standardrillenkugellager ist.

12. Wälzlageranordnung nach einem der Ansprüche 10 oder 11, wobei zwischen den einander zugewandten Stirnseiten der beiden Innenringe ein Distanzring angeordnet ist.

13. Wälzlageranordnung nach einem der Ansprüche 1 bis 12, wobei wenigstens eine der Wälzkörperreihen in einem kammartigen Käfig angeordnet und der ringartige Abschnitt des Käfigs auf der dem Zwischenteil gegenüberliegenden der Wälzkörperreihe Seite angeordnet ist.

14. Wälzlageranordnung nach Anspruch 13, wobei die Wälzkörper in den Käfig einschnappbar sind.

15. Wälzlageranordnung nach einem der Ansprüche 1 bis 14, wobei an der dem Zwischenteil gegenüberliegenden Seite wenigstens einer der Wälzkörperreihen zum Abdichten eines die Wälzkörper beinhaltenden Raums eine Deckscheibe, eine reibungsarme Dichtscheibe oder eine schleifende Dichtung vorgesehen ist.

16. Wälzlageranordnung nach einem der Ansprüche 1 bis 15, wobei die Wälzlageranordnung im Bereich der Wälzkörperreihen befettet ist.

17. Wälzlageranordnung nach einem der Ansprüche 1 bis 16, wobei die Wälzkörperreihen entsprechend einer Radialwälzlagerung angeordnet sind.

18. Wälzlageranordnung nach einem der Ansprüche 1 bis 17, wobei die Wälzkörper als Kugeln ausgebildet sind.

19. Wälzlageranordnung nach einem der Ansprüche 1 bis 18, wobei die Wälzlageranordnung einem Drehgeber zugehört.

20. Wälzlageranordnung nach einem der Ansprüche 1 bis 19, wobei das Zwischenteil derart gestaltet ist, dass es einen Raum zwischen dem Außen- und Innenteil einer der Wälzkörperreihen, der in axialer Richtung durch eine Einhüllende der Wälzkörperreihe begrenzt ist, zu 80 bis 95 % ausfüllt.
